# EUROPÄISCHE PATENTANMELDUNG

(11) **EP 2 827 463 A2**
(43) Veröffentlichungstag der Anmeldung: **21.01.2015**
(21) Anmeldenummer: 14163116.8
(22) Anmeldetag: 02.04.2014
(51) Int. Cl.: H02G 3/12

(54) **Elektrisches/elektronisches Installationsgerät**

(30) Priorität: 19.07.2013 DE 102013107704
(71) Anmelder: Insta Elektro GmbH, 58509 Lüdenscheid (DE)
(72) Erfinder: Bröer, Stefan, 58579 Schalksmühle (DE)

(57) **Zusammenfassung**

Es wird ein elektrisches/elektronisches Installationsgerät vorgeschlagen, an dessen Gehäuse ein Träger festgelegt ist, und welches zur Halterung in einer Installationsdose mit zumindest einer, eine Spreizkralle und eine Spreizschraube aufweisenden Befestigungseinrichtung ausgerüstet ist. Zu dem Zweck, ein elektrisches/elektronisches Installationsgerät zu schaffen, bei welchem die für eine zuverlässige Rückstellung der zugeordneten Spreizkralle vorgesehenen Federelemente besonders platzsparend ausgeführt und untergebracht sind, und welches sich besonders störungsarm und komfortabel in Installationsdosen montieren lässt, weist zumindest ein T-förmig ausgebildetes Halteelement zumindest einen, rückstellend mit der zugeordneten Spreizkralle zusammenwirkenden Federschenkel auf.

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind in der Regel dafür vorgesehen, in sogenannte Installationsdosen montiert zu werden. Damit auf einfache Art und Weise eine zuverlässige Befestigung der elektrischen/elektronischen Installationsgeräte gewährleistet ist, sind diese mit sogenannten Spreizkrallen ausgerüstet, welche über Spreizschrauben betrieben werden.

Durch die DE 10 2007 021 636 B4 ist ein dem Oberbegriff des Hauptanspruches entsprechendes elektrisches/elektronisches Installationsgerät bekannt geworden. Dieses elektrische/elektronische Installationsgerät weist ein aus Kunststoff bestehendes, zur Aufnahme von Funktionselementen vorgesehenes Gehäuse auf, an welchem ein als Tragplatte ausgebildeter Träger und zwei Befestigungseinrichtungen festgelegt sind, wobei jede Befestigungseinrichtung eine Spreizkralle sowie eine, dieser zugeordnete Spreizschraube aufweist. Zur Aufnahme der beiden Spreizkrallen und der beiden Spreizschrauben sind zwei Ausnehmungen im Gehäuse vorhanden. Dabei ist unterhalb jeder Ausnehmung eine quer zur Längserstreckung der Spreizschraube verlaufende Aufnahmetasche in die Außenwand eingeformt, wobei die dem Kopf der Spreizschraube zugewandte Wandung der Aufnahmetasche einen Durchbruch zur Einführung der Spreizschraube aufweist. Jede der beiden Befestigungseinrichtungen weist zudem ein T-förmig ausgebildetes Halteelement auf, dessen zur Einführung in die Aufnahmetasche vorgesehener Basisschenkel mit einem Gewindedurchzug zur Kooperation mit der zugehörigen Spreizschraube versehen ist. Zur zuverlässigen Rückstellung sind am Gehäuse zwei, jeweils mit der zugeordneten Spreizkralle zusammenwirkende Federstege vorhanden. Solche Federstege bauen jedoch auf die Außenwand des Gehäuses auf und können insbesondere bei beengten Einbauverhältnissen störend wirken. Auch die, bereits in ihrer zurückgezogenen Position über die Außenwand des Gehäuses hinaus stehenden Spreizkrallen können beim Einbau des elektrischen/elektronischen Installationsgerätes in eine Installationsdose störend wirken.

Ausgehend von derart ausgebildeten elektrischen/elektronischen Installationsgeräten liegt der vorliegenden Erfindung die Aufgabe zugrunde, ein elektrisches/elektronisches Installationsgerät zu schaffen, bei welchem die für eine zuverlässige Rückstellung der zugeordneten Spreizkralle vorgesehenen Federelemente (Federschenkel) besonders platzsparend ausgeführt und untergebracht sind.

Erfindungsgemäß wird diese Aufgabe durch die im Hauptanspruch angegebenen Merkmale gelöst.

Bei einer solchen Ausbildung ist zudem besonders vorteilhaft, dass auch die beiden Spreizkrallen bei besonders stabiler Ausführung platzsparend in geschützter Art und Weise (Aufnahme) am Gehäuse untergebracht sind. Die Spreizkrallen stehen in ihrer zurückgezogenen Position nicht über die Außenwand des Gehäuses hinaus. Zudem ist besonders vorteilhaft, wenn die T-förmigen Halteelemente an Bereichen des Gehäuses zur Anlage kommen, die besonders stabil ausgeführt sind, damit für eine optimale Krafteinleitung Sorge getragen ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigen:

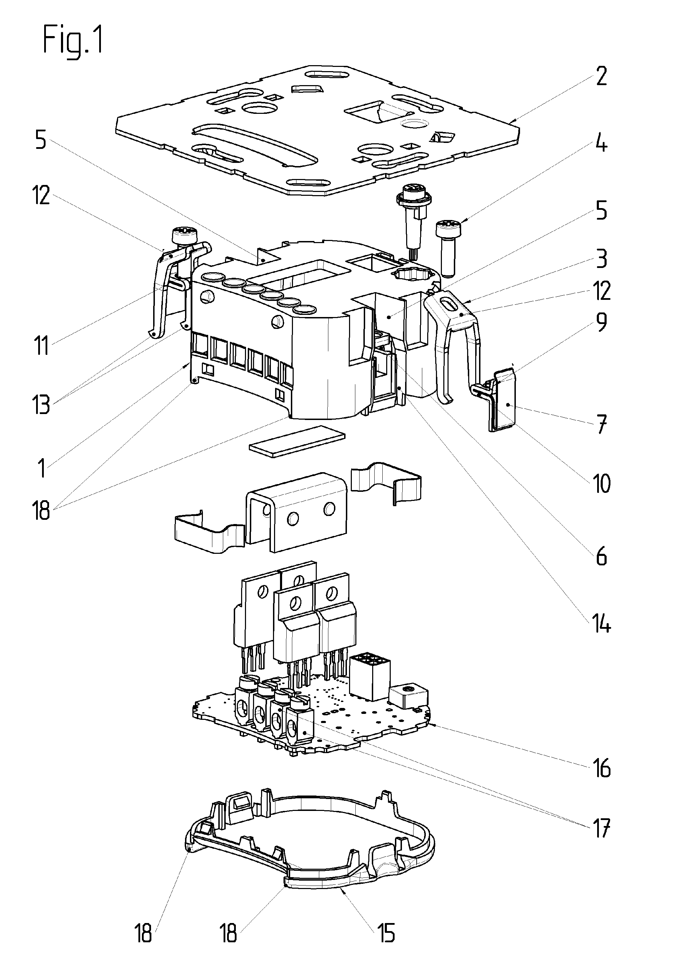

- Fig. 1:: prinziphaft ein solches elektrisches/elektronisches Installationsgerät räumlich in Explosionsdarstellung;
- Fig. 2:: prinziphaft einen Zusammenbau eines solchen elektrischen/elektronischen Installationsgerätes im Teilschnitt;

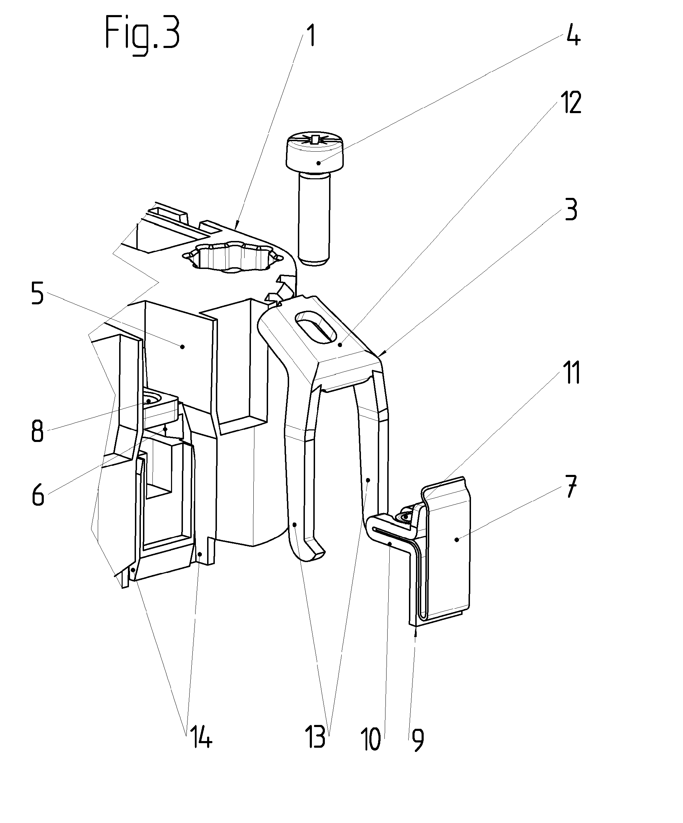

- Fig. 3:: prinziphaft eine Spreizkralle und ein, mit einem Federschenkel versehenes Halteelement räumlich in vergrößerter Darstellung.

Wie aus den Figuren hervorgeht, besteht ein solches elektrisches/elektronisches Installationsgerät im Wesentlichen aus einem aus Kunststoff bestehenden, zur Aufnahme von Funktionselementen vorgesehenen Gehäuse 1, an welchem ein Träger 2 und zwei, jeweils eine Spreizkralle 3 und eine Spreizschraube 4 aufweisende Befestigungseinrichtungen festgelegt sind. Das Gehäuse 1 weist zur Aufnahme jeder der beiden Befestigungseinrichtungen zwei Ausnehmungen 5 auf, welche in dieses eingeformt sind. Ein solches elektrisches/elektronisches Installationsgerät ist üblicherweise zur Befestigung in einer, der Einfachheit nicht dargestellten, Installationsdose vorgesehen.

Wie des Weiteren aus den Figuren hervorgeht, ist unterhalb der beiden Ausnehmung 5 jeweils eine sich quer zur Längserstreckung der zugeordneten Spreizschraube 4 verlaufende Aufnahmetasche 6 in die Außenwand des Gehäuses 1 eingeformt. In die, dem Kopf der zugeordneten Spreizschraube 4 zugewandte Wandung der Aufnahmetasche 6, ist ein, zur Einführung der Spreizschraube 4 dienender Durchbruch 8 eingebracht. Jede der beiden Befestigungseinrichtungen weist zudem ein T-förmig ausgebildetes Halteelement 9 auf, dessen zur Einführung in die Aufnahmetasche 6 vorgesehener Basisschenkel 10 mit einem Gewindedurchzug 11 zur Kooperation mit dem Gewinde der zugeordneten Spreizschraube 4 versehen ist. An den Basisschenkel 10 sind zwei quer zu diesem verlaufende Kopfschenkel angeformt, welche abstützend an der Außenwand des Gehäuses 1 zur Anlage kommen. Die beiden T-förmig ausgebildeten Halteelemente 9 weisen je einen, rückstellend mit der zugeordneten Spreizkralle 3 zusammenwirkenden Federschenkel 7 auf. Wie bereits erwähnt, ist jedem der beiden Spreizkrallen 3 ein T-förmig ausgebildetes Halteelement 9, versehen mit einem Federschenkel 7, zugeordnet. Der Federschenkel 7 ist jeweils als eine, am Halteelement 9 festgelegte Blattfeder ausgeführt. Der als Blattfeder ausgeführte Federschenkel 7 ist dabei an dem, mit dem Gewindedurchzug 11 versehenen Basisschenkel 10 des Halteelementes 9 festgelegt. Das T-förmige Halteelement 9 ist jeweils als Stanzbiegeteil ausgeführt und aus Metall hergestellt. Der Basisschenkel 10 des T-förmigen Halteelementes 9 ist doppelt so dick, wie die beiden Kopfschenkel ausgeführt, weil das Material im Bereich des Basisschenkels 10 doppellagig ausgeführt ist. Zwischen den beiden Materiallagen des Basisschenkels 10 ist der Federschenkel 7 mit seinem ersten Endbereich durch Klemmung auf einfache Art und Weise sicher am Halteelement 9 festgelegt.

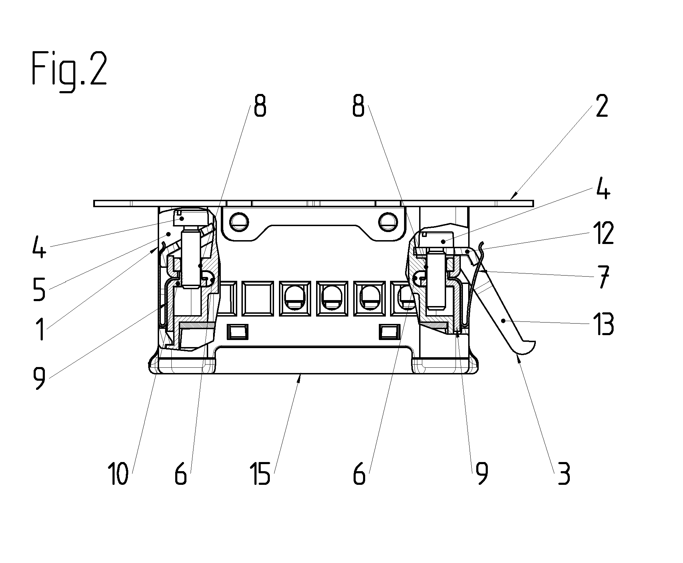

Wie des Weiteren aus den Figuren hervorgeht, weisen die beiden Spreizkrallen 3 jeweils eine U-förmige Kontur auf. Die beiden Spreizkrallen 3 bestehen jeweils aus einer flächig ausgeführten Basis 12 und zwei sich winklig von dieser weg erstreckenden Krallenarmen 13. Die beiden Krallenarme 13 sind einstückig an die Basis 12 angeformt. Der Federschenkel 7 ist zwischen den beiden Krallenarmen 13 angeordnet und kommt mit seinem zweiten Endbereich unter Federwirkung an der Basis 12 der zugehörigen Spreizkralle 3 zur Anlage, um für eine zuverlässige Rückstellung der Spreizkralle 3 Sorge zu tragen. Dies ist deshalb notwendig, weil die beiden Spreizkrallen 3, betrieben über die zugehörigen Spreizschrauben 4, ausgehend von einer zurückgezogenen Position in eine vorgeschobene Position gebracht werden können. Durch das Anziehen der beiden Spreizschrauben 4 werden die beiden Spreizkrallen 3 aus ihrer zurückgezogenen Position hinausbewegt und kommen letztendlich in ihrer vorgeschobenen Position an der Innenwandung der zugeordneten Installationsdose (der Einfachheit halber nicht dargestellt) zur Anlage. Durch diese Bewegung werden die Federschenkel 7 mehr und mehr gespannt. Die dadurch erzeugte erhöhte Federkraft wirkt während der gesamten Einbauzeit in der Installationsdose, da die Spreizschrauben 4 einer Entspannung der Federschenkel 7 entgegenwirken. Für eine sichere und dauerhafte Festlegung des elektrischen/elektronischen Installationsgerätes in der Installationsdose ist damit Sorge getragen. Erst wenn das elektrische/elektronische Installationsgerät wieder aus seiner Installationsdose entnommen werden soll, werden durch Lösen der Spreizschrauben 4 die beiden Federschenkel 7 wieder entspannt und drücken dabei die Spreizkrallen 3 wieder in ihre zurückgezogene Position zurück. Einfach ist nun die Entnahme des elektrischen/elektronischen Installationsgerätes aus der Installationsdose möglich. Zur geschützten Aufnahme der beiden Spreizkrallen 3 in ihrer zurückgezogenen Position sind vier linienförmig ausgeführte Aufnahmeausnehmungen 14 in das Gehäuse 1 eingeformt. Dabei sind die vier Aufnahmeausnehmungen 14 dafür vorgesehen, jeweils einen der vier Krallenarme 13 geschützt aufzunehmen. Geschützte Aufnahme bedeutet dabei, dass die Krallenarme 13 der Spreizkrallen 3 in der zurückgezogenen Position nicht über das Gehäuse 1 hinaus stehen. Zu diesem Zweck ist das Gehäuse 1 an der, dem Träger 2 gegenüberliegenden Seite auch mit einem Deckel 15 verschlossen, in welchen sich die vier Aufnahmeausnehmungen 14 für die geschützte Aufnahme der beiden Spreizkrallen 3 ebenfalls erstrecken. Somit sind auch die freien Enden der vier Krallenarme 13 geschützt durch das Gehäuse 1 bzw. den Deckel 15 aufgenommen. Besonders deutlich sind die unterschiedlichen Positionen der Spreizkrallen 3 in der Figur 2 dargestellt, wobei auf der linken Seite des elektrischen/elektronischen Installationsgerätes die geschützte Aufnahme, und auf der rechten Seite des elektrischen/elektronischen Installationsgerätes die vorgeschobene Position der beiden Spreizkrallen 3 dargestellt sind.

Im Gehäuse 1 ist eine Leiterplatte 16 gehalten, welche mit mehreren Funktionselementen bestückt ist. Unter anderem sind eine Reihe dieser Funktionselemente als Anschlussklemmen 17 ausgeführt. An der Oberseite des Gehäuses 1 ist der als Tragplatte ausgeführte Träger 2 festgelegt, welcher je nach Ausführungsform des elektrischen/elektronischen Installationsgerätes auch als Tragring ausgeführt sein kann. Da die Leiterplatte 16 derartige Abmessungen aufweist, so dass diese mit ihren Außenkanten an den Innenwandungen des Gehäuses 1 zur Anlage kommt, stellt dieser Gehäusebereich den stabilsten Gehäusebereich des Gehäuses 1 dar. Um die Montage des elektrischen/elektronischen Installationsgerätes möglichst zu vereinfachen, ist der, den Anschlussklemmen 17 zugeordnete Gehäusebereich des Gehäuses 1 bauchig ausgeführt. Zudem sind Abrundungen in diesen Bereichen am Gehäuses 1 und am Deckel 15 vorhanden, damit die zum Anschluss vorgesehenen elektrischen Leitungen besonders einfach verlegt werden können. Als Positionierungshilfe für die elektrischen Leitungen sind zudem Führungsnasen 18 an das Gehäuse 1 und an den Deckel 15 angeformt.

Auf besonders einfache Art und Weise ist somit ein elektrisches/elektronisches Installationsgerät realisiert, was sich montagetechnisch besonders störungsarm und komfortabel in zugehörige Installationsdosen montieren lässt.

### Bezugszeichenliste:

- 1.: Gehäuse
- 2.: Träger
- 3.: Spreizkralle
- 4.: Spreizschraube
- 5.: Ausnehmung
- 6.: Aufnahmetasche
- 7.: Federschenkel
- 8.: Durchbruch
- 9.: Halteelement
- 10.: Basisschenkel
- 11.: Gewindedurchzug
- 12.: Basis
- 13.: Krallenarme
- 14.: Aufnahmeausnehmung
- 15.: Deckel
- 16.: Leiterplatte
- 17.: Anschlussklemmen
- 18.: Führungsnasen

## Patentansprüche

1. Elektrisches/elektronisches Installationsgerät, vorgesehen zur Montage in Installationsdosen, mit einem aus Kunststoff bestehenden, zur Aufnahme von Funktionselementen vorgesehenen Gehäuse, an welchem ein Träger und zumindest eine, eine Spreizkralle und eine Spreizschraube aufweisende Befestigungseinrichtung festgelegt sind, und wobei im Gehäuse zur Aufnahme für jede Befestigungseinrichtung eine Ausnehmung vorhanden ist, wobei unterhalb jeder Ausnehmung eine quer zur Längserstreckung der Spreizschraube verlaufende Aufnahmetasche in die Außenwand des Gehäuses eingeformt ist, und wobei die dem Kopf der Spreizschraube zugewandte Wandung der Aufnahmetasche einen Durchbruch zur Einführung der Spreizschraube aufweist, und wobei jede Befestigungseinrichtung ein T-förmig ausgebildetes Halteelement aufweist, dessen zur Einführung in die Aufnahmetasche vorgesehener Basisschenkel mit einem Gewindedurchzug zur Kooperation mit der Spreizschraube versehen ist, und wobei dessen quer zum Basisschenkel angeordnete Kopfschenkel abstützend an Bereichen der Außenwand des Gehäuses zur Anlage kommen, **dadurch gekennzeichnet, dass** zumindest ein T-förmig ausgebildete Halteelement (9) zumindest einen, rückstellend mit der zugeordneten Spreizkralle (3) zusammenwirkenden Federschenkel (7) aufweist.

2. Elektrisches/elektronisches Installationsgerät nach Anspruch 1, **dadurch gekennzeichnet, dass** zumindest ein Federschenkel (7) einstückig am Halteelement (9) ausgebildet ist.

3. Elektrisches/elektronisches Installationsgerät nach Anspruch 1 oder 2, **dadurch gekennzeichnet, dass** zumindest ein Federschenkel (7) als am Halteelement (9) festgelegte Blattfeder ausgeführt ist.

4. Elektrisches/elektronisches Installationsgerät nach einem der Ansprüche 1 bis 3, **dadurch gekennzeichnet, dass** der zumindest ein, als Blattfeder ausgeführter Federschenkel (7) über seinen ersten Endbereich am, mit dem Gewindedurchzug (11) versehenen Basisschenkel (10) des Halteelementes (9) festgelegt ist.

5. Elektrisches/elektronisches Installationsgerät nach einem der Ansprüche 1 bis 4, **dadurch gekennzeichnet, dass** zumindest eine Spreizkralle (3) eine U-förmige Kontur aufweist und aus einer flächig ausgeführten Basis (12) und zwei, sich von dieser weg erstreckenden Krallenarmen (13) besteht, und dass zumindest ein Federschenkel (7) mit seinem zweiten Endbereich unter Federwirkung an der Basis (12) der Spreizkralle (3) zur Anlage kommt.

6. Elektrisches/elektronisches Installationsgerät nach einem der Ansprüche 1 bis 4, **dadurch gekennzeichnet, dass** zumindest eine Spreizkralle (3) eine U-förmige Kontur aufweist und aus einer flächig ausgeführten Basis (12) und zwei, sich von dieser weg erstreckenden Krallenarmen (13) besteht, und dass zumindest ein Federschenkel (7) mit seinem zweiten Endbereich unter Federwirkung an zumindest einem der Krallenarme (13) zur Anlage kommt.

7. Elektrisches/elektronisches Installationsgerät nach einem der Ansprüche 1 bis 5, **dadurch gekennzeichnet, dass** zur geschützten Aufnahme zumindest einer Spreizkralle (3) zumindest eine Aufnahmeausnehmung (14) in das Gehäuse (1) eingeformt ist.

8. Elektrisches/elektronisches Installationsgerät nach einem der Ansprüche 1 bis 6, **dadurch gekennzeichnet, dass** das Gehäuse (1) an der, dem Träger (2) gegenüberliegenden Seite mit einem Deckel (15) verschlossen ist, und dass sich die zumindest eine Aufnahmeausnehmung (14) für die geschützte Aufnahme einer Spreizkralle (3) bis in den Deckel (15) des Gehäuses (1) erstreckt.
